# EUROPEAN PATENT SPECIFICATION

(11) **EP 1 479 815 B1**
(45) Date of publication and mention of the grant of the patent: **12.08.2009**
(21) Application number: 04011639.4
(22) Date of filing: 17.05.2004
(51) Int. Cl.: D06M 13/00, D06M 13/207, D06M 13/144, D06F 75/10, D06M 23/02, C02F 5/10

(54) **A perfumed anhydrous composition with anti-lime effect, in particular for steam supplying machines**
Wasserfreie Riechstoffzusammensetzung mit Antikesselsteinwirkung, insbesondere für Dampfzuführmaschinen
Composition anhydre parfumée à effet détartrant, en particulier pour les machines d'alimentation en vapeur

(30) Priority: 20.05.2003 IT MI20030987
(43) Date of publication of application: 24.11.2004
(73) Proprietor: GRC Parfum S.p.A., 20122 Milano (IT)
(72) Inventor: Segalla, Gabriele, 20086 Motta Visconti (Milano) (IT)
(74) Representative: Petruzziello, Aldo

(56) References cited:
- EP-A- 0 089 256
- WO-A-02/10503
- WO-A-95/06154
- BE-A- 904 377
- GB-A- 335 687
- US-A- 3 160 555
- DATABASE WPI Section Ch, Week 200302 Derwent Publications Ltd., London, GB; Class D15, AN 2003-023958 XP002288384 & JP 2002 301496 A (OTSUKA KAGAKU YAKUHIN KK) 15 October 2002 (2002-10-15)

## Description

The present invention relates to a perfumed anhydrous compound with anti-lime effect, particularly suited for use in steam supplying machines.

The field of the invention is that of water-based compounds used for perfuming articles and products (such as garments, upholstery, carpets, etc.) with the aid of steam supplying machines, such as for example boiler irons, machines for domestic and industrial cleaning provided with boilers for the generation of steam, and the like.

In particular for the purpose of perfuming the garments ironed using steam irons, there are currently available on the market perfumed compounds with anti-lime function, consisting of large volumes of demineralised water, to which perfumes and anti-lime agents are added. Such compounds incorporate specific surfactants, referred to as "solubilizers", for solubilizing the perfume in water (for example, PEG 40 hydrogenated castor oil, Sorbitan (20) OE monolaurate, Sorbitan (20) OE monostearate, Sorbitan (20) OE mono-oleate, sodium lauryl sulphate, sodium laureth sulphate, etc.).

WO 0 210 503 and WO 9 506 154 disclose performed composition for steam iron.

The main drawback of traditional anti-lime perfumed compounds is represented by the fact that the addition of solubilizers can be made only in the factory, with the consequent need of having to put on the market not the small concentrated dose of the base compound, but the voluminous final aqueous composition thereof to be used just as it is, possibly integrated with smaller quantities of water. For this reason, the user is forced to buy the final product (the perfumed ironing water) necessarily in the large volumes that are required for covering a reasonable number of applications. The result is the very large-sized formats of the products on sale, and the consequent disadvantages in the stages of production, packaging, transportation, warehousing and sale.

Negative aspects are inevitably also involved in the costs of the compounds put on the market, which to a certain extent are not justified by the basically aqueous nature of the product sold.

At the same time, the substances used for solubilizing perfume in water, which are present in the compounds according to the known art, are characterized by a high molecular weight and very high boiling points (and hence a very low steam tension). For this reason, such solubilizers, once introduced into the boiler, for example the boiler of an iron, tend either to remain there in the form of incrustations on the walls and in the tubes of the boiler itself or else to come out in liquid form together with the steam.

Amongst the main drawbacks caused by the above described phenomena, the following should be recalled:
- incrustations and occlusions, with consequent damages to the metal parts involved;
- modification, in the long run, of the thermodynamic characteristics of the boilers or of the thermal systems for production of the steam inside the iron, with possible consequent risk of failure, cracking, or, worse still, explosion;
- emission of evil-smelling fumes when said substances are in contact, for example, with the heated plate of the iron and undergo thermal degradation;
- exit of a jet of boiling "surface activated" water, instead of a normal flow of steam, due to the thermodynamic and chemical-physical variations caused by said solubilizing substances on the mass of pressurized hot water inside the iron; and
- consequent possible stains on the fabrics that undergo the action of a steam iron charged with water containing said solubilizers.

Object of the invention is to provide a new anti-lime perfumed compound which, in contrast to the currently known ones, will enable the marketing not of the end product - i.e. of the product already added with large volumes of water - but of a concentrated dose of anti-lime perfumed compound, having a small, concentrated volume, which will not contain any solubilizer and will be ready for the addition of the desired amounts of water to be vaporized.

Another object of the invention is to provide a compound of the aforementioned type, which will present a high anti-lime effect, i.e. greater than the one offered by currently existing compounds.

A further object of the invention is to provide a perfumed compound for use with steam supplying machines, which will be rapidly dispersible in water.

Yet a further object of the invention is to provide an anhydrous anti-lime perfumed compound, i.e. one that is completely devoid of the amounts of water that are necessary for the final production of steam.

The above and further objects are achieved with the compound according to Claim 1. Preferred embodiments of the invention emerge from the remaining claims.

Unlike currently existing anti-lime perfumed waters for irons, which are sold in large formats (1-2 litres) with a high water content and which are expensive and difficult to transport, the compound according to the invention affords the advantage of not containing either water or any solubilizer. Thanks to its nature of anhydrous product, the compound forming the subject of the present invention occupies a very small volume, making it possible, even starting from a 15-ml bottle, to perform dozens of ironing operations and to achieve an effective anti-lime action on dozens of litres of water.

In fact, from simple stoichiometric calculations it can be inferred that about ten drops (corresponding to approximately 0.25-0.27 g) of the compound according the invention are sufficient for treating 1 litre of water having a hardness of 10°F (French degrees), i.e. a hardness corresponding to a concentration of 0.1 g of CaCO₃ in a litre of water (it should be recalled that medium-hard waters have a hardness of 8-12°F - French degrees). Consequently, a bottle containing 15 g of the compound according to the invention is sufficient for treating approximately 55-60 litres of water of medium hardness.

Thanks to the invention, moreover, there is obtained a dry and constant flow of steam, an uniform perfuming both of the fabrics ironed and of the environment in which ironing is carried out, together with an effective anti-lime action, both against the formation of new incrustations and against already existing ones.

The above and further objects, characteristics and advantages are obtained with the perfumed anhydrous compound with anti-lime effect according to the invention, which is characterized basically in that it consists of a mixture comprising at least one α-hydroxyacid consisting of lactic acid or glycolic acid and a perfume. Even more preferred is lactic acid of the formula:

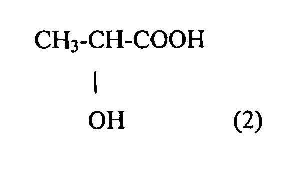

The lactic acid that has proved preferable for the purposes of the present invention is thermo stable 90 % lactic acid L(+).

In fact, lactic acid, when it is introduced into drinking water and subsequently brought up to boiling point, reacts with the lime present in the water to form calcium lactate Ca(CH₃-CH(OH)-COO)₂ which, unlike many other organic or inorganic salts of calcium, has a good solubility in water (9 g in 100 ml). This results obviously in a better decalcification of the metal walls of the boiler or of the corresponding tubes of the iron, by the mere fact that the calcium and magnesium ions pass into solution in the form of lactates and are subsequently eliminated simply by rinsing.

Preferably, for the purpose of bestowing to the compound a more effective solubilizing action of the perfume, an alcohol is added. In this case, the combination of the α-hydroxyacid with an alcohol offers, at the same time, both the desired function of solubilization for the perfume and the anti-lime function. Advantageously, this function is obtained in a direct way, without need for any auxiliary intervention or for any integrative component, a fact that renders the compound ready for use.

Consequently, thanks to the invention, it is sufficient to have available a few drops of the compound to add to the desired volume of water to be used, for example, in the iron. In the case where the iron is of the type with separate boiler, the drops can be introduced directly into the boiler through the hole provided for introduction of the water, in which the compound according to the invention is dispersed in a very rapid and complete way. Once the operating temperature of the iron is reached, there will be obtained a flow of perfumed and perfuming steam, as well as a concurrent anti-lime effect on the internal parts of the iron, thus eliminating and preventing incrustations and occlusions due to lime deposits and hence prolonging the average service life and the proper operation of the steam apparatus.

The combination of α-hydroxyacid with an alcohol exerts a particularly synergistic effect on the solubilization of perfume in water, realising at the same time an effective anti-lime action.

Amongst the alcohols preferred for the purposes of the invention, the alcohols of formula R-OH may be cited, where R consists of any alkyl group, which may be primary, secondary or tertiary, with open or cyclic chain, either saturated or unsaturated or containing an aromatic ring, with a number of carbon atoms between 2 and 10. Preferred for the purposes of the invention is isopropylic alcohol.

In the field of the invention, the choice of the perfume can be strictly linked to the commercial tastes and requirements. However, it is preferable, for the purposes of the invention, for the components forming the perfuming part to be particularly selected in relation to their chemical-physical characteristics, discarding all those molecules that could give rise, at the working pressures and temperatures of a steam iron, to degradation, oxidation or polymerisation. In addition to preventing drawbacks of the type referred to above, this constitutes a complete guarantee for the health of the operator in so far as, during vaporization, there is no formation or emission of any volatile substances that are toxic, harmful or noxious by inhalation.

For the above reason, preferred perfumed substances are constituted by unsaturated monocyclic and bicyclic aliphatic and aromatic monoterpenic hydrocarbons, terpenic alcohols, esters, ethers, ketones, which have a very precise boiling point, i.e. which are capable of reaching boiling, and hence of passing to the vapour phase, without undergoing any degradation of chemical nature such as oxidation, breaking of chemical bonds, polymerization, isomerization, peroxidation.

The compound according to the invention hence consists of at least one α-hydroxyacid (80-99 wt%) and perfume (1-20 wt%). Preferably, the compound according to the invention is formed by a mixture, which comprises one or more of the aforementioned α-hydroxyacids (20-99 wt%), alcohol (5-70 wt%) and perfume (1-20 wt%).

Even more preferred is the composition of the invention formed by:
- 90-91% lactic acid70 wt%
- isopropylic alcohol25 wt%
- perfume5 wt%

Provided hereinafter are some indicative and non-limiting examples of formulation and compound according to the invention. All the percentages indicated are to be understood as weight percentages.

### EXAMPLE I

The components were introduced, in the order indicated, into a paddle mixer, at room temperature and were stirred up to complete homogeneous dispersion:
- 90-91 % lactic acid (PURAC HS90)98 wt%
- SV Agrumarsy perfume, produced by GRC Parfum S.p.A.2 wt%

With the same modalities, further solutions were prepared, with compositions as given below.

### EXAMPLE II

- 90-91% lactic acid (PURAC HS90)93 wt%
- citric acid5 wt%
- SV Agrumarsy perfume, produced by GRC Parfum S.p.A.2 wt%

### EXAMPLE III

- 90-91% lactic acid (PURAC HS90)35 wt%
- citric acid5 wt%
- isopropylic alcohol50 wt%
- SV Agrumarsy perfume, produced by GRC Parfum S.p.A.10 wt%

### EXAMPLE IV

- 90-91% lactic acid (PURAC HS90)23 wt%
- 57% glycolic acid solution3 wt%
- citric acid2 wt%
- malic acid2 wt%
- ethyl alcohol 95°60 wt%
- SV Fleur97 perfume, produced by GRC Parfum S.p.A.10 wt%

### EXAMPLE V

The perfume called "Agrumarsy", produced by GRC Parfum S.p.A. and used in the compositions of the above Examples I, II, and III, was prepared, as likewise the other perfumes used for the present invention, via an accurate selection of the constituent raw materials, in order to obtain a stable perfuming mixture, particularly suited for use in the conditions of pressure and temperature that are present, for example, inside a steam iron.

In particular, the Agrumarsy perfume had the following formulation:
- fenchyl acetate0.6 wt%
- eucalyptus citriodora essence2.2 wt%
- methyl dihydrojasmonate3.0 wt%
- geraniol.2 wt%
- citronellol7.2 wt%
- β-naphthyl methyl ether 2-methoxy-naphthalene7.2 wt%
- 2-(1,1-dimethylethyl)-cyclohexanol acetate7.2 wt%
- dimyrceto7.2 wt%
- Java citronella essence14.7 wt%
- diphenyl ether43.5 wt%

### EXAMPLE VI

In a steam iron with boiler manufactured by Polti, model "Vaporella Super Pro Lux", there were introduced, through the water-inlet hole, approximately 1200 ml of tap water, as per the corresponding operating instructions. Then, there were introduced directly into the boiler, through the same water-inlet hole, 10 drops of the compound according to Example III. After closing the water-inlet hole with the plug provided, the machine was set in operation and six shirts were steam ironed. The flow of the steam emitted by the machine was pleasantly perfumed and perfuming for the entire duration of the ironing operation. The resulting steam was moreover found to be drier than usual and consequently more effective as anti-creasing effect.

To provide a further increase in the perfuming action on some garments, 5 drops of the compound were put into a glass of water; the resulting solution was then nebulized directly on the garments, and subsequently ironed with the same boiler iron. As a result, the garments were perfectly ironed and had a persistent and pleasant clean scent of "Marseilles soap".

### EXAMPLE VII

In an old aluminium boiler model "Extra Al." of the same Polti iron referred to in the previous example, visibly incrusted with lime deposits, there was introduced a litre of tap water treated with 10 drops (0.27 grams) of the following compound:
- 90-91% lactic acid (PURAC HS90)70 wt%
- isopropylic alcohol25 wt%
- SV Agrumarsy perfume, produced by GRC Parfum S.p.A.5 wt%

The boiler was brought up to the operating pressure and temperature and, keeping the valve for supply of the steam open, all the content of water previously charged was used up in the form of steam. The same operation was then repeated 20 times, i.e. with 20 litres of water treated with the same compound described above.

Then the boiler was cold rinsed twice using each time 1 litre of cold tap water.

The boiler was then removed, opened and carefully examined. An evident and practically total absence of lime incrustations was found.

### EXAMPLE VIII

In a steam iron, not of the boiler type, manufactured by Termozeta , model "Diamond Plus", there were introduced 150 ml of water treated with 5 drops of the solution referred to in the previous example. A number of cotton towels were then ironed. The results obtained were very similar to the ones obtained in Example VI.

### EXAMPLE IX

In a steam machine for cleaning environments, manufactured by Polti, model "Vaporetto", there were introduced, through the water-inlet hole, approximately 1200 ml of tap water, as per corresponding operating instructions. Ten drops of the following compound were then introduced directly into the boiler through the same water-inlet hole:
- 90-91% lactic acid (PURAC HS90)70 wt%
- isopropylic alcohol20 wt%
- SV Fleur97 perfume, produced by GRC Parfum S.p.A.10 wt%

The machine was set in operation, and a basement measuring approximately 30 m², which had previously been kept closed and not aired for several months, was steam cleaned. The perfumed flow of the steam emitted by the machine proved particularly effective in bestowing on the environment a pleasant and persisting fragrance of hygiene and of cleanliness with a pleasant background scent of flowers.

## Claims

1. A perfumed anhydrous compound with anti-lime effect for steam supplying machines, **characterized in that** it consists of a mixture comprising al least one perfume, which is a perfume capable of reaching the working pressures and temperatures of a steam iron without chemical degradation, and at least one α-hydroxyacid, consisting of lactic acid or glycolic acid in the absence of surfactant-solubilizing agents for said perfume.

2. The compound of claim 1, **characterized in that** the components of said perfume are chosen from amongst monocyclic and bicyclic unsaturated aliphatic and aromatic monoterpenic hydrocarbons, terpenic alcohols, esters, ethers, ketones, having a very precise boiling point, i.e capable of reaching boiling and hence of passing into the vapour phase, without undergoing any degradation of a chemical nature such as oxidation, breaking of chemical bonds, polymerization, isomerization, or peroxidation.

3. The compound according to Claim 2, **characterized in that** said perfume consists of the SV Agrumarsy perfume produced by GRC Parfum S.p.A.

4. The compound according to Claim 1, **characterized in that** said α-hydroxyacid consists of lactic acid L(+).

5. The compound according to Claim 1, **characterized in that** it further comprises at least one alcohol.

6. The compound according to claims 5, **characterized in that** said alcohol has the general formula: R-OH, with R consisting of any alkyl group which may be primary, secondary or tertiary, with open or cyclic chain, either saturated or unsaturated or containing an aromatic ring, with a number of carbon atoms between 2 and 10.

7. The compound according to Claim 6, **characterized in that** said alcohol consists of isopropylic alcohol.

8. The compound according to one or more of the preceding claims, **characterized in that** it has the following composition:
- at least one α-hydroxyacid consisting of lactic acid or glycolic acid 80-99 wt%
- perfume 1-20 wt%

9. The compound according to one or more of Claims 1 to 7, **characterized in that** it consists of a mixture comprising:
- at least one α-hydroxyacid consisting of lactic acid or glycolic acid 20-99 wt%
- alcohol 5-70 wt%
- perfume 1-20 wt%

10. The compound according to Claim 8, **characterized in that** it consists of:
- 90-91% lactic acid (PURAC HS90) 98 wt%
- SV Agrumarsy perfume, produced by GRC Parfum S.p.A. 2 wt%

11. The compound according to Claim 8, **characterized in that** it consists of:
- 90-91 % lactic acid (PURAC HS90) 93 wt%
- citric acid 5 wt%
- SV Agrumarsy perfume, produced by GRC Parfum S.p.A. 2 wt%

12. The compound according to Claim 8, **characterized in that** it has the following composition:
- 90-91% lactic acid 70 wt%
- isopropylic alcohol 25 wt%
- perfume 5 wt%

13. The compound according to Claim 9, **characterized in that** it consists of:
- 90-91% lactic acid (PURAC HS90) 35 wt%
- citric acid 5 wt%
- isopropylic alcohol 50 wt%
- SV Agrumarsy perfume, produced by GRC Parfum S.p.A. 10 wt%

14. A concentrated dose of a compound according to one or more of the preceding claims for preparing a water-based product, perfumed and with anti-lime effect for steam supplying machines.

15. A water-based product, perfumed and with anti-lime effect for steam supplying machines, **characterized in that** it is obtained with the compound according to one or more of the preceding claims.

16. The product according to Claim 15, **characterized in that** for 1200 ml of tap water it contains 10 drops of the compound according to one or more of the preceding claims.

17. The product according to Claim 15, **characterized in that** for a litre of tap water it contains 10 drops (0.27 g) of the following compound:
- 90-91% lactic acid (PURAC HS90) 70 wt%
- isopropylic alcohol 25 wt%
- SV Agrumarsy perfume, produced by GRC Parfum S.p.A. 5 wt%

18. The product according to Claim 15, **characterized in that** for 150 ml of tap water it contains 5 drops of the compound according to one or more of the preceding claims.

19. Use of the compound according to one or more of the preceding claims for preparing a water-based product, perfumed and with anti-lime effect for steam supplying machines.

## Patentansprüche

1. Wasserfreie Riechstoffzusammensetzung mit Antikesselsteinwirkung für Dampfzufiihrmaschinen, **dadurch gekennzeichnet, dass** sie aus einem Gemisch besteht, welches mindestens einen Riechstoff, der die Betriebsdrücke und die Betriebstemperaturen eines Dampfbügeleisens ohne chemische Zersetzung erreichen kann, und mindestens eine α-Hydroxysäure, bei welcher es sich um Milchsäure oder Glykolsäure handelt, in Abwesenheit von Lösungsvermittlern für oberflächenaktive Substanzen für den Riechstoff umfasst.

2. Zusammensetzung nach Anspruch 1, **dadurch gekennzeichnet, dass** die Komponenten des Riechstoffs aus monocyclischen und bicyclischen ungesättigten aliphatischen und aromatischen Monoterpen-Kohlenwasserstoffen, Terpenalkoholen, Estern, Ethern und Ketonen ausgewählt sind, welche einen sehr präzisen Siedepunkt aufweisen, welche also sieden und somit in die Gasphase übergehen können, ohne eine Zersetzung chemischer Art, z.B. Oxidation, Bruch chemischer Bindungen, Polymerisation, Isomerisierung oder Peroxidierung, zu durchlaufen.

3. Zusammensetzung nach Anspruch 2, **dadurch gekennzeichnet, dass** der Riechstoff aus dem Riechstoff SV Agrumarsy, hergestellt von der GRC Parfum S.p.A., besteht.

4. Zusammensetzung nach Anspruch 1, **dadurch gekennzeichnet, dass** es sich bei der α-Hydroxysäure um L(+)-Milchsäure handelt.

5. Zusammensetzung nach Anspruch 1, **dadurch gekennzeichnet, dass** sie ferner mindestens einen Alkohol umfasst.

6. Zusammensetzung nach Anspruch 5, **dadurch gekennzeichnet, dass** der Alkohol die allgemeine Formel R-OH aufweist, wobei R für irgendeine primäre, sekundäre oder tertiäre offenkettige oder cyclische Alkylgruppe steht, die entweder gesättigt oder ungesättigt sein kann oder einen aromatischen Ring enthalten kann, wobei die Alkylgruppe 2 bis 10 Kohlenstoffatome enthält.

7. Zusammensetzung nach Anspruch 6, **dadurch gekennzeichnet, dass** es sich bei dem Alkohol um Isopropanol handelt.

8. Zusammensetzung nach einem oder mehreren der vorhergehenden Ansprüche, **dadurch gekennzeichnet, dass** sie die folgenden Anteile aufweist:
- mindestens eine α-Hydroxysäure, bei welcher es sich um Milchsäure oder Glykolsäure handelt: 80 - 99 Gew.-%
- Riechstoff: 1 - 20 Gew.-%

9. Zusammensetzung nach einem oder mehreren der Ansprüche 1 bis 7, **dadurch gekennzeichnet, dass** sie aus einem Gemisch besteht, welches das Folgende umfasst:
- mindestens eine α-Hydroxysäure, bei welcher es sich um Milchsäure oder Glykolsäure handelt: 20 - 99 Gew.-%
- Alkohol: 5 - 70 Gew.-%
- Riechstoff: 1 - 20 Gew.-%

10. Zusammensetzung nach Anspruch 8, **dadurch gekennzeichnet, dass** sie aus dem Folgenden besteht:
- 90-91 %-Milchsäure (PURAC HS90): 98 Gew.-%
- Riechstoff SV Agrumarsy,
hergestellt von der GRC Parfum S.p.A.: 2 Gew.-%

11. Zusammensetzung nach Anspruch 8, **dadurch gekennzeichnet, dass** sie aus dem Folgenden besteht:
- 90-91%-Milchsäure (PURAC HS90): 93 Gew.-%
- Zitronensäure: 5 Gew.-%
- Riechstoff SV Agrumarsy,
hergestellt von der GRC Parfum S.p.A.: 2 Gew.-%

12. Zusammensetzung nach Anspruch 8, **dadurch gekennzeichnet, dass** sie die folgenden Anteile aufweist:
- 90-91%-Milchsäure: 70 Gew.-%
- Isopropanol: 25 Gew.-%
- Riechstoff: 5 Gew.-%

13. Zusammensetzung nach Anspruch 9, **dadurch gekennzeichnet, dass** sie aus dem Folgenden besteht:
- 90-91%-Milchsäure (PURAC HS90): 35 Gew.-%
- Zitronensäure: 5 Gew.-%
- Isopropanol: 50 Gew.-%
- Riechstoff SV Agrumarsy,
hergestellt von der GRC Parfum S.p.A.: 10 Gew.-%

14. Konzentrierte Dosis einer Zusammensetzung nach einem oder mehreren der vorhergehenden Ansprüche zur Herstellung eines Riechstoffproduktes auf Wasserbasis mit Antikesselsteinwirkung für Dampfzufiihrmaschinen.

15. Riechstoffprodukt auf Wasserbasis mit Antikesselsteinwirkung für Dampfzufiihrmaschinen, **dadurch gekennzeichnet, dass** es mit der Zusammensetzung nach einem oder mehreren der vorhergehenden Ansprüche zu erhalten ist.

16. Produkt nach Anspruch 15, **dadurch gekennzeichnet, dass** es für 1200 ml Leitungswasser 10 Tropfen der Zusammensetzung nach einem oder mehreren der vorhergehenden Ansprüche enthält.

17. Produkt nach Anspruch 15, **dadurch gekennzeichnet, dass** es für einen Liter Leitungswasser 10 Tropfen (0,27 g) der folgenden Zusammensetzung enthält:
- 90-91 %-Milchsäure (PURAC HS90): 70 Gew.-%
- Isopropanol: 25 Gew.-%
- Riechstoff SV Agrumarsy,
hergestellt von der GRC Parfum S.p.A.: 5 Gew.-%

18. Produkt nach Anspruch 15, **dadurch gekennzeichnet, dass** es für 150 ml Leitungswasser 5 Tropfen der Zusammensetzung nach einem oder mehreren der vorhergehenden Ansprüche enthält.

19. Verwendung der Zusammensetzung nach einem oder mehreren der vorhergehenden Ansprüche zum Herstellen eines Riechstoffproduktes auf Wasserbasis mit Antikesselsteinwirkung für Dampfzuführmaschinen.

## Revendications

1. Composé anhydre parfumé à effet détartrant pour les machines d'alimentation en vapeur, **caractérisé en ce qu'**il comprend un mélange constitué d'au moins un parfum, qui est un parfum capable d'atteindre les pressions et températures fonctionnelles d'un fer à vapeur sans dégradation chimique, et d'au moins un α-hydroxyacide, constitué d'acide lactique ou d'acide glycolique en l'absence de tensioactifs solubilisants pour ledit parfum.

2. Composé selon la revendication 1, **caractérisé en ce que** les composants dudit parfum sont choisis parmi les hydrocarbures monoterpéniques aliphatiques et aromatiques insaturés monocycliques et bicycliques, les alcools terpéniques, les esters, les éthers, les cétones, ayant un point d'ébullition très précis, c'est-à-dire capable de bouillir et par conséquent, de se transformer en phase vapeur, sans subir de dégradation de nature chimique telle que l'oxydation, la rupture des liaisons chimiques, la polymérisation, l'isomérisation ou la peroxydation.

3. Composé selon la revendication 2, **caractérisé en ce que** ledit parfum comprend le parfum SV Agrumarsy produit par GRC Parfum S.p.A.

4. Composé selon la revendication 1, **caractérisé en ce que** ledit α-hydroxyacide est constitué d'acide lactique L(+).

5. Composé selon la revendication 1, **caractérisé en ce qu'**il comprend en outre au moins un alcool.

6. Composé selon la revendication 5, **caractérisé en ce que** ledit alcool est de formule générale: R-OH, R étant constitué d'un quelconque groupe alkyle qui peut être primaire, secondaire ou tertiaire, ayant une chaîne ouverte ou cyclique, saturée ou insaturée ou contenant un cycle aromatique, ayant un nombre d'atomes de carbone compris entre 2 et 10.

7. Composé selon la revendication 6, **caractérisé en ce que** ledit alcool est constitué d'alcool isopropylique.

8. Composé selon une ou plusieurs des revendications précédentes, **caractérisé en ce qu'**il a la composition suivante:
- au moins un a-hydroxyacide
constitué d'acide lactique ou d'acide glycolique 80 à 99% en poids
- du parfum 1 à 20% en poids

9. Composé selon une ou plusieurs des revendications 1 à 7, **caractérisé en ce qu'**il est constitué d'un mélange comprenant:
- au moins un α-hydroxyacide
constitué d'acide lactique ou d'acide glycolique 20 à 99% en poids
- de l'alcool 5 à 70% en poids
- du parfum 1 à 20% en poids

10. Composé selon la revendication 8, **caractérisé en ce qu'**il comprend:
- 90 à 91% d'acide lactique (PURAC HS90) 98% en poids
- du parfum SV Agrumarsy, produit par GRC Parfum S.p.A. 2% en poids

11. Composé selon la revendication 8, **caractérisé en ce qu'**il comprend:
- 90 à 91% d'acide lactique (PURAC HS90) 93% en poids
- de l'acide citrique 5% en poids
- du parfum SV Agrumarsy, produit par GRC Parfum S.p.A. 2% en poids

12. Composé selon la revendication 8, **caractérisé en ce qu'**il a la composition suivante:
- 90 à 91% d'acide lactique 70% en poids
- de l'alcool isopropylique 25% en poids
- du parfum 5% en poids

13. Composé selon la revendication 9, **caractérisé en ce qu'**il comprend:
- 90 à 91% d'acide lactique (PURAC HS90) 35% en poids
- de l'acide citrique 5% en poids
- de l'alcool isopropylique 50% en poids
- du parfum SV Agrumarsy, produit par GRC Parfum S.p.A. 10% en poids

14. Dose concentrée d'un composé selon une ou plusieurs des revendications précédentes pour préparer un produit aqueux, parfumé et à effet détartrant pour les machines d'alimentation en vapeur.

15. Produit aqueux, parfumé et à effet détartrant pour les machines d'alimentation en vapeur, **caractérisé en ce qu'**il est obtenu avec le composé selon une ou plusieurs des revendications précédentes.

16. Produit selon la revendication 15, **caractérisé en ce que** pour 1200 ml d'eau du robinet, il contient 10 gouttes du composé selon une ou plusieurs des revendications précédentes.

17. Produit selon la revendication 15, **caractérisé en ce que** pour 1 litre d'eau du robinet, il contient 10 gouttes (0,27g) du composé suivant:
- 90 à 91 % d'acide lactique (PURAC HS90) 70% en poids
- de l'alcool isopropylique 25% en poids
- du parfum SV Agrumarsy, produit par GRC Parfum S.p.A. 5% en poids

18. Produit selon la revendication 15, **caractérisé en ce que** pour 150 ml d'eau du robinet, il contient 5 gouttes du composé selon une ou plusieurs des revendications précédentes.

19. Utilisation du composé selon une ou plusieurs des revendications précédentes pour préparer un produit aqueux, parfumé et à effet détartrant pour les machines d'alimentation en vapeur.
